# EUROPÄISCHE PATENTSCHRIFT

(11) **EP 1 752 361 B1**
(45) Veröffentlichungstag und Bekanntmachung des Hinweises auf die Patenterteilung: **15.10.2008**
(21) Anmeldenummer: 06116198.0
(22) Anmeldetag: 28.06.2006
(51) Int. Cl.: B62D 15/02

(54) **Vorrichtung zur Ermittlung der Position und eines Drehmoments einer Welle**
Shaft torque and position sensor
Capteur combiné de position et de couple

(30) Priorität: 11.08.2005 DE 102005037938
(43) Veröffentlichungstag der Anmeldung: 14.02.2007
(73) Patentinhaber: ZF Lenksysteme GmbH, 73527 Schwäbisch Gmünd (DE)
(72) Erfinder: Abele, Wolfgang, 73565 Spraitbach (DE)

(56) Entgegenhaltungen:
- EP-A- 1 293 752
- EP-A- 1 344 711
- EP-B- 0 914 590
- DE-A1- 10 060 287
- PATENT ABSTRACTS OF JAPAN Bd. 2003, Nr. 08, 6. August 2003 (2003-08-06) -& JP 2003 097908 A (KOYO SEIKO CO LTD), 3. April 2003 (2003-04-03)

## Beschreibung

Die Erfindung betrifft eine Vorrichtung zur Ermittlung der Position und eines Drehmoments einer Welle nach dem Oberbegriff des Anspruchs 1.

Die EP 0 914 590 B1 beschreibt eine Vorrichtung zur Ermittlung der Position einer rotierenden Welle mit einem zweipoligen Ringmagnet-element, das mit der Welle drehfest verbunden ist und mit einem Statorelement aus einem magnetisch leitenden Material in dem das Ringmagnetelement angeordnet ist. In dem Ringmagnetelement sind, um einen gleichen Winkel versetzt, drei Luftspalte eingebracht, wobei in zwei nebeneinanderliegenden Luftspalten jeweils ein Hall-IC-Element angeordnet ist, das bei einer Drehung des Ringmagnetelements relativ zu dem Statorelement Flussspannungsmeßwerte abgibt.

Eine einzige Auswerteeinrichtung nimmt einen von jedem Hall -IC-Element gemessenen Hall-IC-Spannungsverlauf auf und ordnet diesem einen Stellungswinkel der Welle zu. Die Auswerteeinrichtung rechnet aus den ihr zugehenden Fluß-Spannungsmeßwerten den tatsächlichen Stellungs-winkel der Welle aus.

Die Vorrichtung ist für sicherheitskritische Aufgaben nicht geeignet, da diese nicht redundant ausgelegt ist.

Die DE 100 60 287 A1 beschreibt eine Vorrichtung zur Ermittlung der Position und eines Drehmoments einer Welle mit einer ersten Signalerzeugungseinrichtung die aus einer ersten und zweiten Spur von Code-Anordnungen an einem ersten Wellenabschnitt der Welle besteht, die eine erste und zweite Signalfolge an eine erste Auswerteeinrichtung abgibt und mit einem über ein Torsionselement an dem ersten Wellenabschnitt festgelegten zweiten Wellenabschnitt, an dem eine zweite Signalerzeugungseinrichtung angeordnet ist, die eine dritte und vierte Signalfolge durch eine dritte und vierte Spur von Code-Anordnungen an eine zweite Auswerteeinrichtung abgibt.

Die Auswerteeinrichtungen sind nicht redundant verschaltet und die Auswerteeinrichtungen greifen lediglich punktförmig gemessene Signale ab, sodass auch die Messgenauigkeit steigerbar ist.

### Aufgabenstellung

Der Erfindung liegt die Aufgabe zugrunde, eine Vorrichtung zur Ermittlung der Position und eines Drehmomentes einer Welle darzustellen, die eine sichere und sehr genaue Ermittlung der Position und des Drehmoments ermöglicht.

Die Aufgabe wird mit einer Vorrichtung mit den Merkmalen des Anspruchs 1 gelöst.

Dadurch, dass die Signale der ersten und der zweiten Signalerzeu-gungseinrichtung über die jeweilige gesamte geometrische Erstreckung oder über das Bogenmaß der Signalerzeugungseinrichtungen von der ersten und/oder zweiten Auswerteeinrichtung erfasst werden, wobei die erste und zweite Auswerteeinrichtung redundant signalübertragend miteinander verschaltet sind, ist zum einen eine umlaufende, ständig vollständige Erfassung der Signale der Signalerzeugungseinrichtungen, wie etwa von induktiven Signalerzeugungseinrichtungen, die als Ring aneinandergereihter Spulen gebildet sind oder von Multipolringen, und eine Mittelwertbildung möglich, und zum anderen ist eine einzige Auswerteeinrichtung nach Ausfall einer anderen noch in der Lage, eine Messwerterfassung und Winkelberechnung vorzunehmen. Die Signalerzeugungseinrichtungen sind bevorzugt mit der Welle bewegbar. Die Auswerteeinrichtungen sind ortsfest. Es kann aber auch zweckmäßig sein, die Signalerzeugungseinrichtungen ortsfest zu gestalten und die Auswerteeinrichtungen mit der Welle bewegbar zu gestalten.

Bevorzugte Ausführungen ergeben sich aus den Unteransprüchen.

Um ein Drehmoment in der Welle bestimmen zu können ist zwischen dem ersten Wellenabschnitt und dem zweiten Wellenabschnitt ein Torsionselement angeordnet. Das Drehmoment wird durch die Winkeldifferenz der beiden gemessenen Winkel von der ersten und zweiten Signalerzeugungseinrichtung und der bekannten Torsionssteifigkeit des Torsionselements bestimmt. Die erste Auswerteeinrichtung und die zweite Auswerteeinrichtung, oder die erste oder die zweite Auswerteeinrichtung allein vermag das Drehmoment zu bestimmen. Die Auswerteeinrichtungen können als Mikrorechner oder Anwender-Rechner-Schaltkreis, auch ASIC genannt, ausgebildet sein. Sie weisen wenigstens ein Rechenwerk (CPU) auf, das mit einem Speicher-baustein verknüpft ist. Das Rechenwerk weist eingangsseitig A/D-Wandler auf und ausgangsseitig bevorzugt einen D/A-Wandler oder ein CAN-BUS-Interface auf. Zu den Auswerteeinrichtungen gehören eine Zahl Sensoren, die die Signale der ersten und/oder zweiten Signalerzeugungs-einrichtungen detektieren und die mit dem A/D-Wandler verbunden sind.

Die zumindest vier Signalfolgen werden durch optische oder feld-erzeugende, bevorzugt induktive, oder feldverändernde Code-Anordnungen generiert, die eine unterschiedliche Signalfrequenz oder Signalperiodizität bei der Rotation der Welle erzeugen oder die sich durch die Bildung unterschiedlicher Felder insbesondere durch eine unterschiedliche Feldpolzahl auszeichnen.

Bevorzugt werden durch die Code-Anordnungen der ersten und/oder zweiten Signalerzeugungseinrichtung ein periodisch sich änderndes elektrisches oder magnetisches Feld erzeugt. Die Code-Anordnungen sind bevorzugt als Ring aus nebeneinandergereihter Spulen oder als Multipolrad oder Multipolring ausgebildet, wobei sich ein Multipolrad oder Multipolring durch eine Anordnung aus Strukturen, die inverse Pole alternierend aufweisen oder auch aus felderzeugenden und nicht felderzeugenden Abschnitte oder Strukturen zusammensetzt. Bei der Anwendung von GMR-Sensoren in den Auswerteeinrichtungen ist es besonders zweckmäßig die jeweiligen Signalfolgen der ersten Signaler-zeugungseinrichtung und der zweiten Signalerzeugungseinrichtung durch eine erste Code-Anordnung oder einen Ring aus nebeneineander-gereihten Spulen oder als Multipolring um die Welle mit einer Teilung n zu bilden und die jeweils zweite Code-Anordnung oder Multipolring um die Welle mit einer Teilung n + 1 auszubilden. Die Position oder der Drehwinkel des ersten Wellenabschnitts wird durch die erste und zweite Signalfolge und die Position des zweiten Wellenabschnittes wird durch die dritte und vierte Signalfolge über ein Noniusverfahren bestimmt, wobei die unterschiedliche Anzahl an Strukturen oder Polpaaren auf der ersten und zweiten Code-Anordnung und der dritten und vierten Code-Anordnung eine Phasenverschiebung verursacht.

Das Drehmoment in der Welle und insbesondere in dem Torsionselement wird in einer besonders bevorzugten Ausführungsform der Vorrichtung redundant durch die Bestimmung der Winkeldifferenz zwischen den Code-Anordnungen der ersten und der zweiten Signalerzeugungseinrichtung mit gleichen Struktur- oder Polzahlen ermittelt. Dies ist die Winkeldifferenz zwischen der ersten und dritten Signalfolge und der zweiten und vierten Signalfolge.

Wird dem Drehmomentsignal oder dem Drehmomentverlauf über einen Drehwinkel von 360° eine für den jeweiligen Drehwinkel signifikante Störgröße überlagert, oder weist die Vorrichtung eine systemimmanente Störgröße bereits auf, so besteht dadurch die Möglichkeit durch eine Auswerteeinrichtung das ermittelte Drehmoment in Abhängigkeit von der Position der Welle zu kompensieren. Die Störgröße ist im Allgemeinen ein systematischer, progressiver oder degressiver Sensorfehler.

Da jeder Wellenabschnitt über eine Signalerzeugungseinrichtung verfügt, ist es möglich eine jeweilige absolute Winkelbestimmung der einzelnen Wellenabschnitte vorzunehmen und nicht nur eine Differenzbildung der Drehwinkel der Wellenabschnitte vorzunehmen. Dies ermöglicht wiederum eine Bestimmung ob ein Drehmoment auf den ersten Wellenabschnitt oder auf den zweiten Wellenabschnitt aufgebracht wird.

Ist die Welle eine Lenkwelle in einem Hilfskraftlenksystem eines Personenkraftwagens oder Nutzkraftwagens, so ist damit eine Möglichkeit geschaffen für eine Regelung Informationen bereitzustellen, die beispielsweise eine aktive Stabilisierung eines Fahrzeugs ermöglichen.

### Ausführungsbeispiel

Die Erfindung wird nun näher anhand eines Ausführungsbeispiels beschrieben und anhand der beiliegenden Zeichnung wiedergegeben.
Fig. 1 zeigt einen schematischen Längsschnitt durch eine Vorrichtung zur Ermittlung der Position und eines Drehmomentes in einer Lenkwelle,
Fig. 2 zeigt eine Signalfolge der Signalerzeugungseinrichtungen der Vorrichtung in Fig. 1,
Fig. 3 zeigt eine schematische Übersicht über die redundanten Bestimmungsmöglichkeiten der Position und des Drehmoments in der Lenkwelle in Fig. 1,
Fig. 4 zeigt eine schematische Übersicht über die redundante Verknüpfung der Signalerzeugungseinrichtungen und Auswerteeinrichtungen der Vorrichtung in Fig. 1.

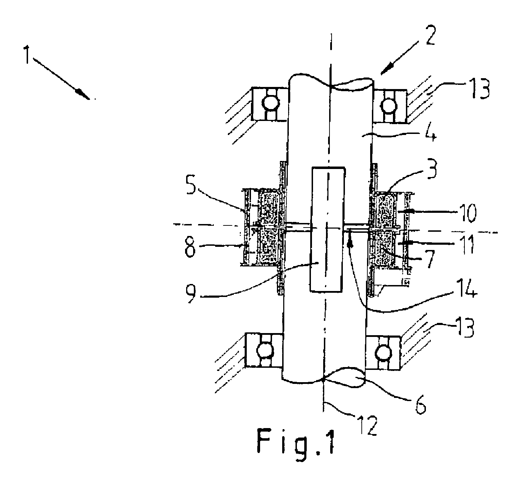

In Fig. 1 ist in einem schematischen Längsschnitt entlang einer Längsachse 12 der Welle 2 eine Vorrichtung 1 zur Ermittlung der Position und eines Drehmoments in der Welle 2 gezeigt. Die Welle 2 ist eine Lenkwelle in einem Hilfskraftlenksystem eines Kraftfahrzeugs und besteht aus einem ersten Wellenabschnitt 4, der drehfest mit einer nicht gezeigten Lenkhandhabe verbunden ist und aus einem zweiten Wellenabschnitt 6, der drehfest mit einem Eingangsglied oder Ritzel eines Lenkgetriebes verbunden ist.

Der erste und zweite Wellenabschnitt 4, 6 ist über ein Torsionselement 9 bekannter Torsionssteifigkeit miteinander verbunden. Die Welle 2 ist in einem Lenksäulengehäuse 13 gelagert.

Das Lenksäulengehäuse 13 dient in der Verschneidungsebene 14 zwischen dem ersten und zweiten Wellenabschnitt 4, 6 zur Festlegung einer ersten und zweiten Auswerteeinrichtung 5, 8. Die Auswerte-einrichtungen 5, 8 sind mit radialem Abstand um die Welle 2 und um eine erste Signalerzeugungseinrichtung 3, die drehbar mit dem ersten Wellenabschnitt 4 und um eine zweite Signalerzeugungseinrichtung 7, die drehbar mit dem zweiten Wellenabschnitt 6 angeordnet ist, an dem Lenksäulengehäuse 13 festgelegt.

Die Auswerteeinrichtungen 5, 8 sind im Wesentlichen aus abtastenden Sensorelementen oder Sensorarrays aus AMR- oder GMR-Sensoren, die über A/D-Wandler mit einem ASIC verbunden sind gebildet. Je Auswerte-einrichtung 5,8 ist ein ASIC und ein Sensorarray um den Umfang der Welle 2 an dem Lenksäulengehäuse 13 angeordnet.

Die erste Signalerzeugungseinrichtung 3 und die zweite Signalerzeugungseinrichtung 7 sind als Ringe aneinandergereihter Spulen 10, 11 um die axialen Enden des ersten und zweiten Wellenabschnittes 4, 6 angeordnet.

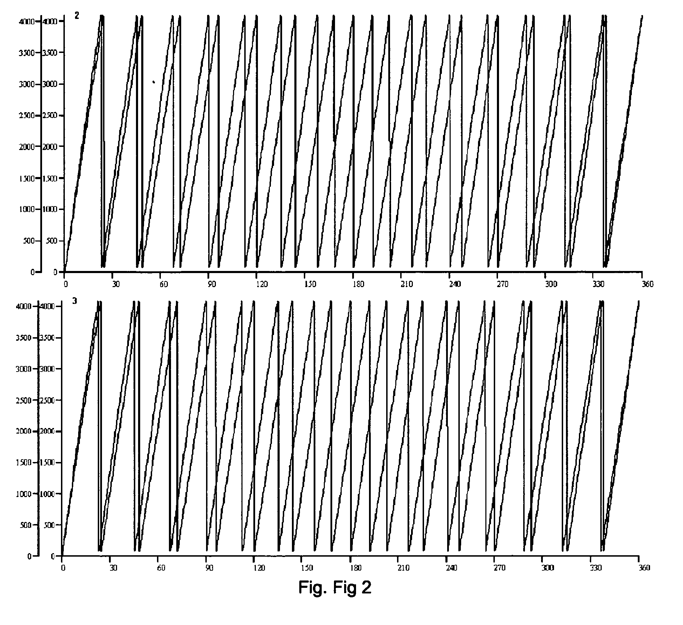

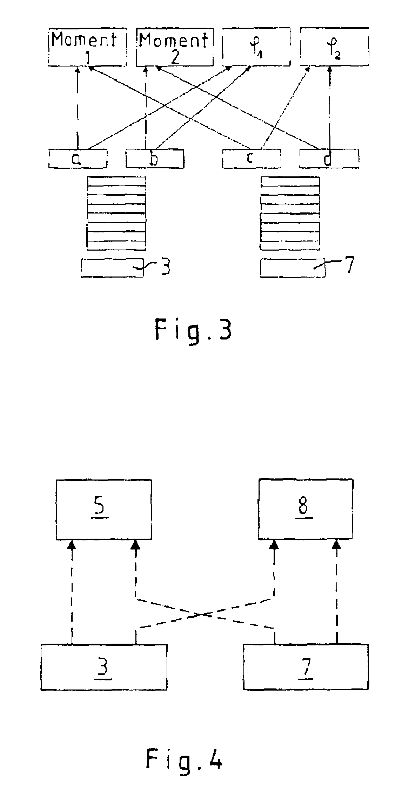

Jeder Ring aneinandergereihter Spulen 10, 11 besteht aus einer ersten und einer zweiten Code-Anordnung. Je eine Code-Anordnung der ersten Signalerzeugungseinrichtung 3 und der zweiten Signalerzeugungs-einrichtung 7 weist 15 Spulen und je eine Code-Anordnung 16 Spulen auf. Die Code-Anordnung mit 15 Spulen ergibt bei Drehung der Welle 2 eine erste Signalfolge a (vgl. Fig. 2) und die Code-Anordnung mit 16 Spulen eine zweite Signalfolge b. Die Code-Anordnung mit 15 Spulen der zweiten Signalerzeugungseinrichtung 7 ergibt wiederum bei Drehung der Welle 2 eine dritte Signalfolge c und die Code-Anordnung mit 16 Spulen eine vierte Signalfolge d (vgl. auch Fig. 3). Wie Fig. 2 zeigt, ergibt sich bei jeder von der jeweiligen Auswerteeinrichtung 5, 8 ermittelten Signalfolge ein Phasenversatz, der mit zunehmendem Drehwinkel φ der Welle zunimmt. Diese Phasendifferenz kann mit einem an sich bekannten Noniusverfahren ausgewertet werden.

Wie Fig. 3 zeigt, wird Der Drehwinkel φ des zweiten Wellenabschnitts 6 durch die Auswertung der dritten und vierten Signalfolge c, d bestimmt.

Das Drehmoment in der Welle 2 wird redundant, zweifach ermittelt, in dem die erste und dritte Signalfolge a, c und die zweite und vierte Signalfolge b, d analysiert werden. Wie Fig. 4 zeigt, ist auch bei Ausfall einer Auswerte-einrichtung oder eines ASIC's die Positionsbestimmung und die Bestimmung des Drehmoments in der Welle 2 durch die Verbindung jeder Signalerzeugungseinrichtung mit jeder Auswerteeinrichtung ermöglicht.

## Patentansprüche

1. Vorrichtung zur Ermittlung der Position und eines Drehmoments einer Welle (2), insbesondere einer Lenkwelle eines Lenksystems, mit einer ersten Signalerzeugungseinrichtung (3) an einem ersten Wellenabschnitt (4) der Welle (2), wobei die erste Signalerzeugungseinrichtung (3) eine erste und zweite Signalfolge (a, b) an eine erste Auswerteeinrichtung (5) abgibt, und mit einem zweiten Wellenabschnitt (6) an dem eine zweite Signalerzeugungs-einrichtung (7), die eine dritte und vierte Signalfolge (c, d) an eine zweite Auswerteeinrichtung (8) abgibt, angeordnet ist, **dadurch gekennzeichnet, dass** die Signale der ersten und der zweiten Signalerzeugungs-einrichtung (3, 7) gleichzeitig über die jeweilige gesamte geometrische Erstreckung der Signalerzeugungseinrichtungen (3, 7) von der ersten und/oder der zweiten Auswerteeinrichtung (5, 8) erfasst werden und die Position der Welle (2) bestimmt ist.

2. Vorrichtung nach Anspruch 1, **dadurch gekennzeichnet, dass** der erste Wellenabschnitt (4) über ein Torsionselement (9) mit dem zweiten Wellen-abschnitt (6) verbunden ist und das Drehmoment in der Welle (2) durch die erste und/oder die zweite Auswerteeinrichtung (5, 8) bestimmt ist.

3. Vorrichtung nach einem der Ansprüche 1 oder 2, **dadurch gekennzeichnet, dass** die Signalfolgen (a,b,c,d) durch optische oder felderzeugende und/oder feldverändernde Code-Anordnungen gebildet sind.

4. Vorrichtung nach einem der Ansprüche 1 bis 3, **dadurch gekennzeichnet, dass** die erste Signalerzeugungseinrichtung (3) und/oder die zweite Signaler-zeugungseinrichtung (7) durch optische oder felderzeugende oder feld-verändernde Code-Anordnungen mit unterschiedlicher Signalperiodizität oder Anzahl von Strukturen der jeweiligen Code-Anordnung gebildet ist.

5. Vorrichtung nach Anspruch 4, **dadurch gekennzeichnet, dass** zumindest eine feldverändernde Code-Anordnung der ersten und/oder zweiten Signal-erzeugungseinrichtung (3, 7) ein periodisch sich änderndes elektrisches oder magnetisches Feld bereitstellt.

6. Vorrichtung nach einem der Ansprüche 1 bis 5, **dadurch gekennzeichnet, dass** die erste Signalerzeugungseinrichtung (7) durch je eine Anordnung einer Anzahl an Spulen (10,11) oder durch je ein Multipolrad oder Multipolring gebildet ist.

7. Vorrichtung nach einem der Ansprüche 1 bis 6, **dadurch gekennzeichnet, dass** die Position des ersten Wellenabschnittes (4) durch die erste und zweite Signalfolge und die Position des zweiten Wellenabschnittes (6) durch die dritte und vierte Signalfolge über ein Noniusverfahren bestimmt sind.

8. Vorrichtung nach einem der Ansprüche 1 bis 7, **dadurch gekennzeichnet, dass** das Drehmoment der Welle (2) aus einer Winkeldifferenz, die durch die erste und dritte Signalfolge (a,c) und/oder durch die zweite und vierte Signalfolge (b,d) definiert ist, bestimmt ist.

9. Vorrichtung nach Anspruch 8, **dadurch gekennzeichnet, dass** der Drehmomentverlauf über 360° signifikant durch eine Störgröße überlagert ist, die systembedingt sein kann.

10. Vorrichtung nach Anspruch 8 oder 9, **dadurch gekennzeichnet, dass** durch eine Auswerteeinrichtung (5, 8) das Drehmoment in Abhängigkeit von der Position oder des Drehwinkels (φ) der Welle (2) kompensiert ist.

11. Vorrichtung nach einem der Ansprüche 1 bis 10, **dadurch gekennzeichnet, dass** durch die erste und/oder die zweite Auswerteeinrichtung (5, 8) detektiert ist, ob ein Drehmoment an dem ersten Wellenabschnitt (4) oder dem zweiten Wellenabschnitt (6) eingeleitet ist.

12. Vorrichtung nach einem der Ansprüche 1 bis 11, **dadurch gekennzeichnet, dass** die Vorrichtung (1) in einem Lenksystem, das als Hilfskraftlenksystem in einem Personenkraftwagen oder Nutzkraftwagen gebildet ist, angeordnet ist.

## Claims

1. Device for determining the position and the torque of a shaft (2), in particular of a steering shaft of a steering system, having a first signal-generating device (3) on a first shaft section (4) of the shaft (2), wherein the first signal-generating device (3) outputs a first and second signal sequence (a, b) to a first evaluation device (5), and having a second shaft section (6) on which a second signal-generating device (7) which outputs a third and a fourth signal sequence (c, d) to a second evaluation device (8) is arranged, **characterized in that** the signals of the first and second signal-generating devices (3, 7) are simultaneously acquired by the first and/or second evaluation devices (5, 8) over the respective entire geometric extent of the signal-generating devices (3, 7), and the position of the shaft (2) is determined.

2. Device according to Claim 1, **characterized in that** the first shaft section (4) is connected to the second shaft section (6) by means of a torsion element (9), and the torque in the shaft (2) is determined by means of the first and/or second evaluation devices (5, 8).

3. Device according to one of Claims 1 or 2, **characterized in that** the signal sequences (a, b, c, d) are formed by visual or field-generating and/or field-changing code arrangements.

4. Device according to one of Claims 1 to 3, **characterized in that** the first signal-generating device (3) and/or the second signal-generating device (7) are formed by optical or field-generating or field-changing code arrangements with different signal periodicities or numbers of structures with the respective code arrangement.

5. Device according to Claim 4, **characterized in that** at least one field-changing code arrangement of the first and/or second signal-generating devices (3, 7) makes available an electrical or magnetic field which changes periodically.

6. Device according to one of Claims 1 to 5, **characterized in that** the first signal-generating device (7) is formed by in each case one arrangement of a number of coils (10, 11) or by means of in each case one multi-pole reel or multi-pole ring.

7. Device according to one of Claims 1 to 6, **characterized in that** the position of the first shaft section (4) is determined by the first and second signal sequences, and the position of the second shaft section (6) is determined by the third and fourth signal sequences by means of a nonius method.

8. Device according to one of Claims 1 to 7, **characterized in that** the torque of the shaft (2) is determined from an angular difference which is defined by the first and third signal sequences (a, c) and/or by the second and fourth signal sequences (b, d).

9. Device according to Claim 8, **characterized in that** an interference variable which may be system-related is superimposed significantly on the torque profile over 360°.

10. Device according to Claim 8 or 9, **characterized in that** an evaluation device (5, 8) compensates the torque as a function of the position or the rotational angle (φ) of the shaft (2).

11. Device according to one of Claims 1 to 10, **characterized in that** the first and/or second evaluation devices (5, 8) detect whether a torque is induced at the first shaft section (4) or the second shaft section (6).

12. Device according to one of Claims 1 to 11, **characterized in that** the device (1) is arranged in a steering system which is formed as a power steering system in a passenger car or utility vehicle.

## Revendications

1. Dispositif pour déterminer la position et un couple de rotation d'un arbre (2), en particulier de l'arbre de volant d'un système de direction, qui présente un premier dispositif (3) de formation de signaux disposé sur une première partie (4) de l'arbre (2), le premier dispositif (3) de formation de signaux délivrant une première et une deuxième succession de signaux (a, b) à un premier dispositif d'évaluation (5), et une deuxième partie d'arbre (6) sur laquelle est disposé un deuxième dispositif (7) de formation de signaux qui délivre une troisième et une quatrième succession de signaux (c, d) à un deuxième dispositif d'évaluation (8),
**caractérisé en ce que**
les signaux du premier et du deuxième dispositif (3, 7) de formation de signaux sont détectés sur toute l'extension géométrique des dispositifs (3, 7) de formation de signaux par le premier et/ou le deuxième dispositif d'évaluation (5, 8) et **en ce que** la position de l'arbre (2) est déterminée.

2. Dispositif selon la revendication 1, **caractérisé en ce que** la première partie d'arbre (4) est reliée à la deuxième partie d'arbre (6) par un élément de torsion (9) et **en ce que** le couple de rotation de l'arbre (2) est déterminé par le premier et/ou le deuxième dispositif d'évaluation (5, 8).

3. Dispositif selon l'une des revendications 1 ou 2, **caractérisé en ce que** les successions de signaux (a, b, c, d) sont formées par des dispositifs de codage optiques, qui émettent un champ et/ou qui modifient un champ.

4. Dispositif selon l'une des revendications 1 à 3, **caractérisé en ce que** le premier dispositif (3) de formation de signaux et/ou le deuxième dispositif (7) de formation de signaux sont formés par des systèmes de codage optiques, qui créent un champ ou qui modifient un champ, chaque dispositif de codage présentant une périodicité de signaux différente ou un nombre différent de structures.

5. Dispositif selon la revendication 4, **caractérisé en ce qu'**au moins un système de codage qui modifie le champ du premier et/ou du deuxième dispositif (3, 7) de formation de signaux délivre un champ électrique ou magnétique qui varie périodiquement.

6. Dispositif selon l'une des revendications 1 à 5, **caractérisé en ce que** le premier dispositif (7) de formation de signaux est formé par un système constitué de plusieurs bobines (10, 11), par une roue multipolaire ou par une bague multipolaire.

7. Dispositif selon l'une des revendications 1 à 6, **caractérisé en ce que** la position de la première partie d'arbre (4) est déterminée par la première et la deuxième succession de signaux et **en ce que** la position de la deuxième partie d'arbre (6) est déterminée par la troisième et la quatrième succession de signaux par un procédé de Nonius.

8. Dispositif selon l'une des revendications 1 à 7, **caractérisé en ce que** le couple de rotation de l'arbre (2) est déterminé par une différence angulaire définie par la première et la troisième succession de signaux (a, c) et/ou la deuxième et la quatrième succession de signaux (b, d).

9. Dispositif selon la revendication 8, **caractérisé en ce qu'**une grandeur perturbatrice significative qui peut être provoquée par le système est superposée à l'évolution du couple de rotation sur 360°.

10. Dispositif selon les revendications 8 ou 9, **caractérisé en ce qu'**un dispositif d'évaluation (5, 8) compense le couple de rotation en fonction de la position ou de l'angle de rotation (φ) de l'arbre (2).

11. Dispositif selon l'une des revendications 1 à 10, **caractérisé en ce que** le premier et/ou le deuxième dispositif d'évaluation (5, 8) détectent si un couple de rotation est appliqué sur la première partie d'arbre (4) ou sur la deuxième partie d'arbre (6).

12. Dispositif selon l'une des revendications 1 à 11, **caractérisé en ce que** le dispositif (1) est disposé dans un système de direction qui forme un système d'assistance dynamique à la direction dans une voiture automobile ou un véhicule utilitaire.
